# EUROPEAN PATENT SPECIFICATION

(11) **EP 0 463 501 B1**
(45) Date of publication and mention of the grant of the patent: **18.05.1994**
(21) Application number: 91109737.6
(22) Date of filing: 13.06.1991
(51) Int. Cl.: B62D 1/19

(54) **Collapsible, energy absorbing steering column support system**
Kraftdämpfende und zusammenschiebbare Lenksäulehalter
Support de colonne de direction affaissable absorbeur d'énergie

(30) Priority: 26.06.1990 IT 6746390
(43) Date of publication of application: 02.01.1992
(73) Proprietor: FIAT AUTO S.p.A., 10135 Torino (IT)
(72) Inventor: Gandiglio, Romolo, I-14019 Villanova d'Asti (IT)
(74) Representative: Boggio, Luigi

(56) References cited:
- FR-A- 2 193 376
- FR-A- 2 276 978
- FR-A- 2 340 235
- GB-A- 1 386 079
- US-A- 4 733 575

## Description

The present invention relates to a collapsible energy absorbing system for supporting a steering column of a vehicle such as defined in the preamble of claim 1 and known for example from FR-A-2276978, capable of preventing or at least containing possible injuries to the driver of the vehicle in the event of impact during an accident.

Collapsible steering columns are known to be used in vehicles in case of an impact resulting from an accident; the safety regulations require, in particular, that the stresses transmitted by the steering shaft to a dummy simulating the body of the driver during a test collision at 24.1 Km/h should not exceed a preset value. To meet these safety regulations there are various known steering column systems that can collapse in the event of a collision, and which, apart from permitting the column to telescope to avoid or at least limit interference with the body of the driver, also have the capability of absorbing at least part of the energy developed during the collision by the effect of the sudden loss of kinetic energy of the vehicle; these capabilities are generally achieved by inserting in the steering column structure one or more yielding elements, which undergo plastic deformation during the collision. Another system consists of providing a support structure for a steering column which, in the event of a collision, permits the latter to be released mechanically.

The systems described are not without disadvantages; in particular, systems of mechanical release are complex and are incapable of absorbing large amounts of energy, while systems based on yielding elements in many cases provide rotation towards the top of the steering column, thus bringing the steering wheel closer to the driver, instead of moving it away from him.

An aim of the invention is to produce a collapsible energy absorbing system for supporting a steering column of a vehicle which is of relatively simple and compact structure and which is capable of collapsing axially in the event of a collision, any displacement towards the top of the steering wheel being contained as much as possible.

The said aim is achieved by the invention which relates to a collapsible energy absorbing system for supporting a steering column of a vehicle as defined in claim 1.

For a better understanding of the invention, a non-restrictive description is now given of one example of realisation thereof, with reference to the appended drawings in which:
Figure 1 illustrates a perspective view of a steering column and a collapsible system of support thereof realised according to the invention;
Figure 2 illustrates in perspective, from the opposite side to figure 1, a detail of the support system of figure 1; and
Figure 3 illustrates in elevation a longitudinal partially sectioned view of the support system of figure 1.

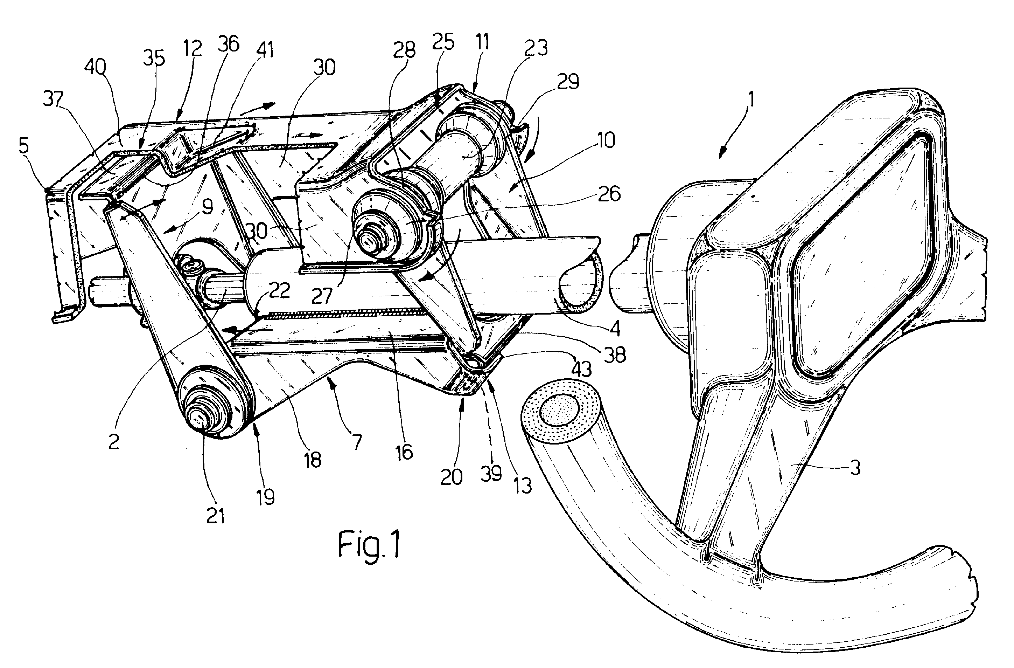

With reference to figures 1 to 3, there is indicated with 1 a steering column for a vehicle of any known type, not illustrated for simplicity, comprising a steering gear shaft 2 connected angularly and integrally in a known manner to a steering wheel 3, and a column 4 having steering gear shaft 2 passing through and capable of turning inside it; column 4 is attached to a bracket or support element 5 attachable in turn by a known method, not illustrated for simplicity, to the body of the said vehicle; for example the bracket 5 can be defined by the pedal support of the vehicle. The attachment between column 4 and bracket 5 is obtained, according to the invention, by a collapsible system of support indicated on the unit with 7 capable, in the event of an accident, of allowing the steering column 1 to move away from the driver and, at the same time, capable of absorbing at least part of the energy developed in an impact as a consequence of the loss of kinetic energy of the vehicle.

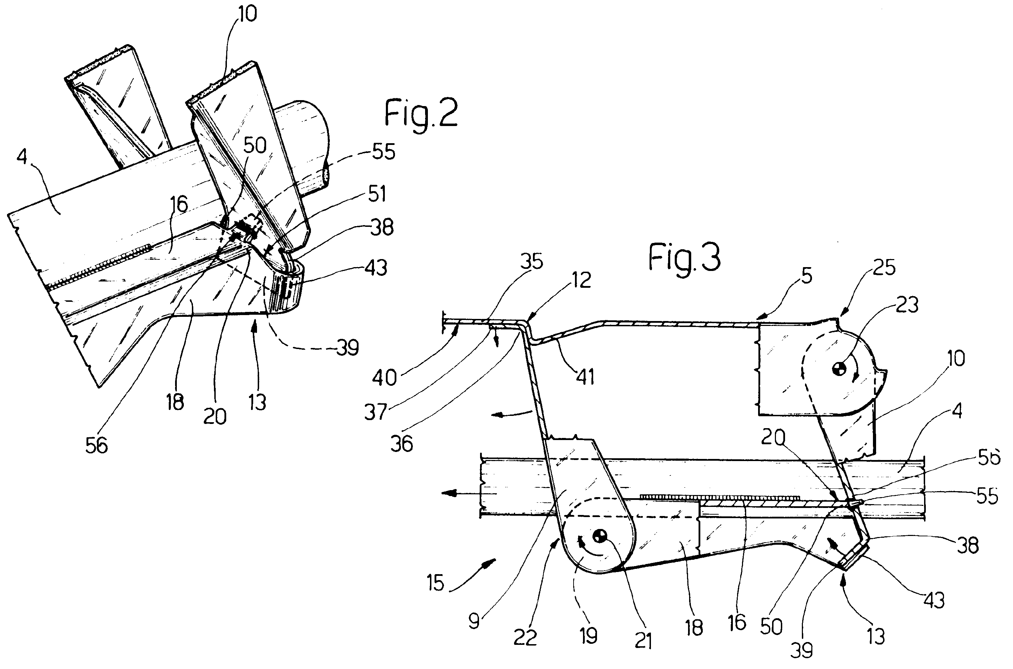

The system 7 comprises respective links or arms, in the example given, a front link 9 and a rear link 10, attached by one of their first ends to column 4, in correspondence with two separate longitudinal points of the latter and, by the opposite end, to bracket 5, frictional means 11 and plastically deformable hinging elements 12 and 13, through which the ends of links 9 and 10 are attached and can rotate relative to column 4 and bracket 5, in such a way as to define thereby an articulated quadrilateral structure, indicated diagramatically with 15 in figure 3, and a collapsible retaining element, for example one which can bend or break, capable of preventing the relative rotation of at least one of links 9,10 with respect to column 4 and/or bracket 5, so as to maintain articulated quadrilateral structure 15 normally locked in the configuration illustrated in figures 1 and 3.

In particular, column 4 is obtained integral with a rectangular plate 16 (for example by being welded along the centre line thereof) provided with two contoured opposing longitudinal edges 18, only one of which is visible in the figure, bent downwards so that plate 16 defines in the unit a substantially rigid U shaped element in correspondence with respective front and rear angles 19,20 at which links 9 and 10 are connected. Link 9 is defined by a U shaped plate hinged by means of a first transversal pin 21 to the front angles 19 of U shaped plate 16, in such a way as to be mounted on a forward end 22 of the latter. Link 10 is conversely defined as a yoke hinged at the open side by means of a second transversal pin 23 to a rear end 25 of bracket 5, towards the steering wheel 3.

While link 9 is simply hinged freely on pin 21, on pin 23 diagonally opposite to 21, are placed the aforementioned means 11 which consist of respective friction washers 26 (only one of which is visible in figure 1), for example of rubber or a synthetic plastic material, mounted coaxially on pin 23, and axially locked thereon, for example by elastic rings 27 (or pins or other similar known means) in such a manner as to define a transversal shoulder interposed between the opposite ends of yoke 10, indicated with 28 and 29, and respective side walls 30 of bracket 5. Pins 21 and 23 attach respectively the lower end of link 9 and the upper ends 28,29 of link 10; the corresponding other opposite ends thereof are attached at diagonally opposite points, respectively to a front portion 35 of bracket 5 and to rear angles 20 of U shaped plate 16, by means of the said plastically deformable hinges 12, 13.

The latter are comprised respectively of a bent portion 36 of a transversal edge 37 of link 9 opposite to pin 21, bent at an obtuse angle to the part opposite link 10, and of a bent portion 38 of transversal edge 39 of link 10, opposite pin 23, bent at an obtuse angle to link 9, or towards edge 37; in order to ensure that, when in use and under force, the bent portion 36 deforms behaving like a plastic hinge, edge 37 rests against an upper face 40 of bracket 5, in correspondence with a transversal sawtooth shaped indentation 41 of the said face defining on the inside of bracket 5 a retaining shoulder for link 9. Edge 39, conversely, rests against two respective opposing flaps of shoulder 43 (only one of which is visible in the figure) of U shaped plate 16 defined as corresponding appendages of edges 18 obtained in correspondence with rear angles 20 and bent in an L shape towards each other, so as to define between these and a rear edge 50 of plate 16 (figure 2) a housing recess 51 in which edge 39 is inserted. Also in correspondence with end 50, the said collapsible retaining element is obtained and, in the example, is defined as a lug 55 engaged in a seat 56 passing practically through link 10, near edge 39.

In use, both lug 55 and the mechanical resistance which the two bent portions 36, 38 are capable of providing (elements 9,10,5 and 16 are preferably made of semi-trimmed pressed sheet metal) retain the articluated quadrilateral 15 locked in a substantially parallelogram configuration formed by the angles of the bend of edges 37,39; in such conditions the steering column 1 is supported firmly and prevented from causing excessive vibration, and therefore the driver can steer the vehicle with maximum comfort.

In the event of an impact, the thrust transmitted to the steering column system 1/articulated quadrilateral 15 tends to produce a relative rotation of links 9,10 with respect to elements 5,16; therefore lug 55 is stressed to breaking point and, once collapsed, leaves link 10 free to rotate around pin 23 and, consequently, link 9 rotates around pin 21 in the direction of the arrows (figure 1,3). Such rotations occur at the expense of the further deformation of bent portions 36,38 which function as a plastic hinge acting "in tandem" with the pin hinges 21,23; in fact, when links 9,10 are forced to rotate, following the rupture of lug 55, link 9 rotates in the direction of the arrow (figure 3) bending at point 36, flap 37 being welded to the pedal guide column support 40 (figure 3) of portion 36. Similarly, depending on the stresses produced between elements 4,9 and 10 during the impact, this occurs along edge 39 against shoulder flap 43, with consequent bending of portion 38.

Therefore column 4 and bracket 5 move relatively in the direction of the arrows (figure 1) substantially in a straight line, without any upward movement of the steering wheel; thus, there being rotation on pins 21, 23, column 4 in practice moves by pivoting around these pins and therefore the steering wheel moves downwards, thus being drawn away from the driver. During this phase, after a small amount of initial absorption caused by the rupture of lug 55, the energy of the impact is for the most part absorbed by the friction developed on pin 23 between washers 26 and walls 30, and by the subsequent deformation of portions 36,38.

The advantages connected with the invention are evident from the description given above; on one hand, a steering column support structure is realised which is simple, light, compact and inexpensive to construct, and ensures the collapse of the steering column without any displacement of the steering wheel 3; on the other hand the absorption of part of the energy developed as a consequence of an accidental impact of the vehicle is obtained principally by friction and plastic deformation of the system. The system can absorb the energy of an impact in a substantially constant manner throughout the phase of collapse, avoiding absorption "peaks" (limited, that is, mainly to the initial phase of the impact) typical of collapsible systems based on the rotation of one or more yielding elements.

## Claims

1. A collapsible energy absorbing system (7) for supporting a steering column (1) of a vehicle comprising a column (4), which housed a steering shaft (2) capable of turning inside it, attached angularly and integrally with a respective steering wheel (3), said system (7) comprising: respective links (9,10) having a first end thereof attached to said column (4) in correspondence with two separate points of the latter; hinging elements (12,13,21,23) by means of which said links (9,10) are attached to said column (4) and the body of the vehicle and capable of rotating relative to said column and body in such a way as to define thereby an articulated quadrilateral structure (15), said hinging elements including plastically deformable hinging elements (12,13); and a collapsible retaining element (18,55), for example one which can bend or break, capable of preventing relative rotation of at least one of the links (9,10) with respect to at least one of said column (4) and body, so as to maintain the articulated quadrilateral structure normally locked; **characterized** in that said system (7) further comprises a bracket (5) by means of which the links (9, 10) are attached to the body of the vehicle, said bracket (5) being connected by said hinging elements (12,13) to a second end of said links (9,10) opposite the first end thereof; and frictional means (26) mounted between said bracket (5) and at least one of said links (9,10) in correspondence with said hinging elements thereof in such a manner so as to be activated by said relative rotation.

2. A system as claimed in claim 1, characterized in that said column (4) is obtained integral with a rectangular plate (16) provided with two opposing longitudinal edges (18) bent downwards, in such a manner as to define a U-shaped element, in correspondence with respective angles (19,20) of which said links (9,10) are connected.

3. A system as claimed in claim 2, characterized in that it comprises a first link (9) defined as a U-shaped plate hinged by means of a first transversal pin (21) to the front angles (19) of the said U-shaped plate (16) integral to the column (4), in such a way as to be mounted on a front end of the latter, and a second link (10) defined as a joke hinged at the open side by means of a second transversal pin (23) to a rear end of the said bracket (5).

4. A system as claimed in claim 3, characterized in that said frictional means consist of respective friction washers (24) mounted coaxially on said second transversal pin (23) axially locked thereon in such a way as to define a transversal shoulder interposed between the opposite ends (28,29) of the second link (10) and respective side walls (30) of said bracket (5).

5. A system according to claim 3 or 4, characterized in that said plastically deformable hinging elements (12,13) connect, at diagonally opposed points, said first and second links (9,10) respectively to a forward portion of said bracket (5) and to the rear angles (20) of said U-shaped bracket (16) integral with the column (4).

6. A system according to claim 5, characterized in that said plastically deformable hinges (12,13) are composed respectively of a bent portion of a transversal edge of the said first link (9) opposite to the first pin (21) and bent at an obtuse angle to the part opposite the said second link (10), and by a bent portion of a transversal edge of the said second link (10), opposite the said second pin (23), and bent at an obtuse angle to the said first link (9); said edge of the first link (9) resting against the upper face of the said bracket (5), in correspondence with a transversal sawtooth shaped indentation (41) in the said face defining on the inside of the bracket (5) a retaining shoulder for the first link (9); and said edge of the second link (10) resting against two respective opposing shoulder flaps (43) of the U shaped bracket defined as corresponding appendages of said longitudinal edges of the bracket (16) integral to the column (4) obtained in correspondence with the rear angles (20) thereof and bent in an L shape towards each other.

7. A system of support according to claim 6, characterised by the fact that the said collapsible retaining element is defined as a lug (55) obtained in correspondence with a rear end of the said U shaped plate (16) integral with the column (4), which is engaged in a seat (56) passing practically through the said second link (10), in proximity to the bent edge (39) thereof.

## Patentansprüche

1. Zusammenschiebbares Energieabsorbtionssystem (7) zum Halten einer Lenksäule (1) eines Fahrzeugs, umfassend eine Säule (4), die eine Lenkwelle (2) aufnimmt, welche sich in deren Inneren drehen kann, die winkelig und als integraler Bestandteil mit einem Lenkrad (3) verbunden ist, wobei das System (7) umfaßt:
- entsprechende Schwingen (9, 10), deren jeweiliges erstes Ende mit der Säule (4) an zwei voneinander getrennten Punkten verbunden ist,
- Scharnierelemente (12, 13, 21, 23), mittels derer die Schwingen (9, 10) an der Säule (4) und der Karosserie befestigt sind, die sich in bezug auf die Säule und Karosserie so drehen können, daß dadurch eine gelenkige vierseitige Struktur (15) definiert wird, wobei die Scharnierelemente plastisch verformbare Scharnierelemente (12, 13) beinhalten, und
- ein zusammenschiebbares Rückhalteelement (18, 55), das beispielsweise biegen oder brechen kann und das eine relative Drehbewegung wenigstens eines der Scharniere (9, 10) in bezug auf wenigstens die Säule (4) oder die Karosserie verhindern kann, um so die gelenkige vierseitige Struktur normalerweise blockiert zu halten,
dadurch gekennzeichnet,
daß das System (7) darüber hinaus einen Bügel (5), mittels dessen die Schwingen (9, 10) an der Karosserie des Fahrzeuges befestigt sind, wobei der Bügel (5) durch die Scharnierelemente (12, 13) mit einem zweiten, dem ersten Ende davon gegenüberliegenden Ende der Schwingen (9, 10) verbunden ist, und
Reibmittel (26) umfaßt, die zwischen dem Bügel (5) und wenigstens einer der Schwingen (9, 10) in Entsprechung mit den Scharnierelementen angebracht sind, so, daß sie durch die erwähnte relative Drehbewegung aktiviert werden.

2. System nach Anspruch 1, dadurch gekennzeichnet, daß die Säule (4) einstückig mit einer rechteckigen Platte (16) ausgebildet ist, die mit zwei gegenüberliegenden nach unten gebogenen Längskanten (18) versehen ist, in einer solchen Weise, um ein U-förmiges Element in Entsprechung mit den betreffenden Winkeln (19, 20), mit denen die Schwingen (9, 10) verbunden sind, zu definieren.

3. System nach Anspruch 2, dadurch gekennzeichnet, daß es eine erste Schwinge (9), die als U-förmiges, mittels eines ersten Querbolzens (21) an die Vorderwinkel (19) der U-förmigen, eine Einheit mit der Säule bildenden Platte (16) angelenkte Platte ausgebildet ist, und eine zweite Schwinge (10) umfaßt, die als an der offenen Seite mittels eines zweiten Querbolzens (23) am hinteren Ende des Bügels (5) angelenktes Joch ausgebildet ist.

4. System nach Anspruch 3, dadurch gekennzeichnet, daß die Reibmittel aus entsprechenden Reibscheiben (24) bestehen, die koaxial auf dem zweiten Querbolzen (23) und axial arretiert darauf angebracht sind, derart, daß sie eine Querschulter bilden, die zwischen den gegenüberliegenden Enden (28, 29) der zweiten Schwinge und den entsprechenden Seitenwänden (30) des Bügels (5) angeordnet sind.

5. System nach Anspruch 3 oder 4, dadurch gekennzeichnet, daß die plastisch verformbaren Scharnierelemente (12, 13) an diagonal gegenüberliegenden Stellen die erste und die zweite Schwinge (9, 10) jeweils mit einem vorderen Bereich des Bügels (5) und mit den hinteren Winkeln (20) des U-förmigen, eine Einheit mit der Säule (4) bildenden Bügels (16) verbinden.

6. System nach Anspruch 5, dadurch gekennzeichnet, daß die plastisch verformbaren Scharniere (12, 13) jeweils gebildet sind aus einem gebogenen Abschnitt einer Querkante der ersten Schwinge (9), der dem ersten Bolzen (21) gegenüberliegt und in einem stumpfen Winkel zu dem der zweiten Schwinge (10) gegenüberliegenden Teil gebogen ist, und einem gebogenen Abschnitt einer Querkante der zweiten Schwinge (10), welcher dem zweiten Bolzen (23) gegenüberliegt und in einem stumpfen Winkel zu der ersten Schwinge (9) gegen die obere Fläche des Bügels (5) in Entsprechung mit einer querverlaufenden, die Form eines Sägezahnes aufweisenden Vertiefung in der besagten Fläche, welche auf der Innenseite des Bügels eine Rückhalteschulter für die erste Schwinge (9) bildet, zur Anlage kommt, und wobei die besagte Kante der zweiten Schwinge (10) gegen zwei gegenüberliegende Schulteransätze (43) des U-förmigen Bügels zur Anlage kommt, die als Fortsätze der Längskanten des Bügels (16), der mit der Säule (4) eine Einheit bildet, ausgebildet sind und in Entsprechung mit den hinteren Winkeln (20) davon erhalten werden und in einer L-Form aufeinander zu gebogen sind.

7. System nach Anspruch 6, dadurch gekennzeichnet, daß das besagte zusammenschiebbare Sicherungselement als Nase (55), die in Entsprechung mit einem hinteren Ende der U-förmigen Platte (16), die eine Einheit mit der Säule (4) bildet, ausgebildet ist und in einen Sitz (56), welcher praktisch durch die zweite Schwinge (10) hindurchgeht, in Nachbarschaft zu der gebogenen Kante (39) davon eingreift.

## Revendications

1. Système affaissable à absorption d'énergie (7) pour supporter une colonne de direction (1) d'un véhicule comprenant une colonne (4) qui contient un arbre de direction (2) pouvant tourner à l'intérieur de la colonne et fixé angulairement et solidairement à un volant respectif (3), ledit système (7) comprenant : des biellettes respectives (9,10) dont une première extrémité est fixée à ladite colonne (4) en correspondance de deux points séparés sur cette dernière ; des éléments d'articulation (12, 13,21,23) par l'intermédiaire desquels lesdites biellettes (9,10) sont reliées à ladite colonne (4) et au châssis du véhicule et peuvent pivoter par rapport à ladite colonne et audit châssis de manière à définir une structure articulée en quadrilatère (15), lesdits éléments d'articulation incluant des éléments d'articulation plastiquement déformables (12,13) ; et un élément de retenue affaissable (18, 55), par exemple un élément qui peut se plier ou se casser, capable d'empêcher la rotation relative d'au moins une des biellettes (9,10) par rapport à au moins l'un de ladite colonne (4) et dudit châssis, de façon à maintenir la structure articulée en quadrilatère normalement bloquée ; caractérisé en ce que ledit système (7) comprend en outre un support (5) par l'intermédiaire duquel les biellettes (9,10) sont fixées au châssis du véhicule, ledit support (5) étant relié par lesdits éléments d'articulation (12,13) à une deuxième extrémité desdites biellettes ( 9,10) à l'opposé de leur première extrémité ; et des moyens de friction (26) montés entre ledit support (5) et aumoins une desdites biellettes (9,10) en correspondance de leursdits éléments d'articulation,de manière à être activés par la dite rotation relative.

2. Système suivant la revendication 1, caractérisé en ce que ladite colonne (4) comporte une plaque rectangulaire solidaire (16) présentant deux bords longitudinaux opposés (18) pliés vers le bas de manière à définir un élément en forme de U, en correspondance des angles respectifs (19,20) auxquels lesdites biellettes (9,10) sont connectées.

3. Système suivant la revendication 2, caractérisé en ce qu'il comprend une première biellette (9) définie par une plaque en forme de U reliée de façon pivotante par un premier axe transversal (21) aux angles avant (19) de ladite plaque en U (16) solidaire de la colonne (4), de manière à être montée sur une extrémité avant de cette dernière, et une deuxième biellette (10) sous la forme d'une chape reliée de façon pivotante, sur son côté ouvert , par l'intermédiaire d'un deuxième axe transversal (23), à une extrémité arrière dudit support (5).

4. Système suivant la revendication 3, caractérisé en ce que lesdits moyens de friction sont constitués par des rondelles de friction respectives (24) montées coaxialement sur ledit deuxième axe transversal (23) et axialement bloquées sur celui-ci de manière à définir un épaulement transversal interposé entre les extrémités opposées (28,29) de la deuxième biellette (10) et les parois latérales respectives (30) dudit support (5).

5. Système suivant la revendication 3 ou 4, caractérisé en ce que lesdits éléments d'articulation plastiquement déformables (12,13)relient,à des points diagonalement opposés, lesdites première et deuxième biellettes (9,10) respectivement à une partie avant dudit support (5) et aux angles arrière (20) de ladite plaque en U (16) solidaire de la colonne (4).

6. Système suivant la revendication 5, caractérisé en ce que lesdites articulations plastiquement déformables (12,13) sont composées respectivement d'une partie pliée d'un bord transversal de ladite première biellette (9), ce bord étant situé à l'opposé du premier axe (21) et plié suivant un angle obtus par rapport à la partie à l'opposé de ladite deuxième biellette (10), et d'une partie pliée d'un bord transversal de ladite deuxième biellette (10), ce bord étant situé à l'opposé dudit deuxième axe (23) et plié suivant un angle obtus par rapport à ladite première biellette (9), ledit bord de la première biellette (9) reposant contre la paroi supérieure dudit support (5) en correspondance d'une indentation transversale en dent de scie (41) formée dans ladite paroi et définissant, du côté intérieur du support (5), un épaulement de retenue pour la première biellette (9) ; et ledit bord de la deuxième biellette (10) reposant contre deux rabattements d'épaulement opposés respectifs (43) de la plaque en U, définis comme des appendices correspondants desdits bords longitudinaux de ladite plaque (16) solidaire de la colonne (4),en correspondance des angles arrière (20) de ladite plaque, ces appendices étant pliés en forme de L l'un vers l'autre.

7. Système de support suivant la revendication 6, caractérisé en ce que ledit élément de retenue affaissable est défini par une patte (55) prévue en correspondance d'une extrémité arrière de ladite plaque en U (16) solidaire de la colonne (4), qui s'engage dans un siège (56) traversant pratiquement ladite deuxième biellette (10) à proximité de son bord plié (39).
